# EUROPEAN PATENT APPLICATION

(11) **EP 3 163 727 A2**
(43) Date of publication of application: **03.05.2017**
(21) Application number: 16192586.2
(22) Date of filing: 06.10.2016
(51) Int. Cl.: H02K 21/46, H02K 1/22

(54) **PERMANENT MAGNET BRUSHLESS MOTOR WITH DOUBLE SQUIRREL CAGE**

(30) Priority: 06.10.2015 US 201514875942
(71) Applicant: Hamilton Sundstrand Corporation, Windsor Locks, CT 06096-1010 (US)
(72) Inventor: GIERAS, Jacek F., Glastonbury, CT 06033 (US)
(74) Representative: Hughes, Andrea Michelle

(57) **Abstract**

A line start permanent magnet (LSPM) brushless motor includes a stator 102, a rotor assembly 104 disposed in the central opening defined by the stator. The rotor assembly includes a magnet unit 118-120 and a rotor 112. The magnet unit is arranged along an inner circumferential surface of the stator so as to define an air gap between the stator. The rotor is rotatably coupled to a shaft such that the rotor is configured to rotate adjacent the magnet unit. The rotor includes a plurality of rotor slots 116, each rotor slot defining a double-cage winding that includes an upper cage 122 and a lower cage 124. The double-cage winding can serve as a damper, which reduces the starting current upon rotational startup of the rotor.

## Description

### TECHNICAL FIELD

The various embodiments relate generally to permanent magnet (PM) motors, and in particular, to line start PM synchronous motors.

### BACKGROUND

Conventional line start permanent magnet (PM) synchronous motors employ a stator winding and single-cage rotor winding which allow synchronous operation without the use of solid state converters. The interaction of the stator rotating magnetic field and the rotor currents induced in the single-cage winding produces a starting torque that rotates the rotor. After rotation is initiated, the rotor is pulled into synchronism and rotates with the speed imposed by the line input frequency. The efficiency of line start PM motors is higher than that of equivalent induction motors and the power factor can be equal to unity. Although line start PM synchronous motors do not require solid state converters, a high starting current in the range of approximately 4 to 8 times higher than the rated current, for example, is typically necessary to generate the starting torque.

### SUMMARY

According to a non-limiting embodiment, a line start permanent magnet (LSPM) brushless motor includes a stator and a rotor assembly disposed in the central opening defined by the stator. The rotor assembly includes a magnet unit and a rotor. The magnet unit is arranged along an inner circumferential surface of the stator so as to define an air gap between the stator. The rotor is rotatably coupled to a shaft such that the rotor is configured to rotate adjacent the magnet unit. The rotor includes a plurality of rotor slots, each rotor slot defining a double-cage winding that includes an upper cage and a lower cage. The double-cage winding reduces the starting current upon rotational startup of the rotor and can serve as a damper.

According to another non-limiting embodiment, a method of reducing in-rush current of a line start permanent magnet (LSPM) brushless motor comprises delivering a startup rotor current through the rotor assembly and delivering a startup stator current through the stator at an initial time period. The frequency of the startup rotor current at the initial time period is approximately equal to the frequency of startup stator current so as to induce rotation of the rotor assembly. The method further includes inducing a magnetic field based on the startup rotor current, and energizing a double-cage winding rotatably coupled to the rotor assembly via the magnetic field. Accordingly, a first amount of winding current flowing through an upper cage of the double-cage winding is greater than a second amount of winding current flowing through the lower cage. The method further comprises increasing a rotational speed of the rotor assembly such that the rotor assembly is approximately synchronized with the magnetic field of the stator at a second time period later than the first time period. The method further includes, in response to synchronizing the rotor with the magnetic field, energizing the lower cage along with the upper cage such that the second level of winding current approximately equals the first level of winding current so as to reduce the in-rush during the initial time period.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a longitudinal section view of a line start permanent magnet (LSPM) brushless motor including a rotor assembly having a double-cage rotor winding; and
FIG. 2 is a plan end view of a two-pole LSPM rotor assembly including a double-cage rotor winding according to a non-limiting embodiment;
FIG. 3 is a plan end view of a four-pole LSPM rotor assembly including a double-cage rotor winding according to another non-limiting embodiment; and
FIG. 4 illustrates various shapes of the rotor slots that define a double-cage rotor winding included in a LSPM rotor assembly according to non-limiting embodiments.

### DETAILED DESCRIPTION

To reduce the high starting current typically required by conventional line start synchronous motors, various non-limiting embodiments of the disclosure provide a double-cage winding in the rotor instead of a single-cage winding. The leakage reactance of the double-cage rotor winding depends on the slip. The slip, where *s* = 1 at rotational starting, means that the frequency of currents in the rotor is high and equal to the stator frequency *f*. For high frequency, the rotor current is generated mainly in the high-resistance and high-inductance upper cage, which reduces the starting current. As the speed increases, the slip decreases and the frequency in the rotor (*sf*) becomes very low. If the rotor approaches synchronism with the stator magnetic field, the slip may reach a value of *s* = 0.02, for example, and if the stator frequency is approximately 60 Hz, for example, the rotor frequency (*sf*) may be defined as, *sf* = 0.02x60 = 1.2 Hz.

Since the frequency is low, the magnetic field penetrates also to the low-resistance and low-leakage reactance lower cage such that the electromagnetic synchronizing torque is high, *e.g.*, approximately 1.5 to 3.5 times the rated torque. In full synchronism (*i.e*., where the slip is set as *s* = 0) the rotor frequency is defined as *sf* = 0, and the electromagnetic torque is produced solely by the interaction between the PM elements and the stator magnetic rotating field. In this manner, the cage winding can then serve as a damper.

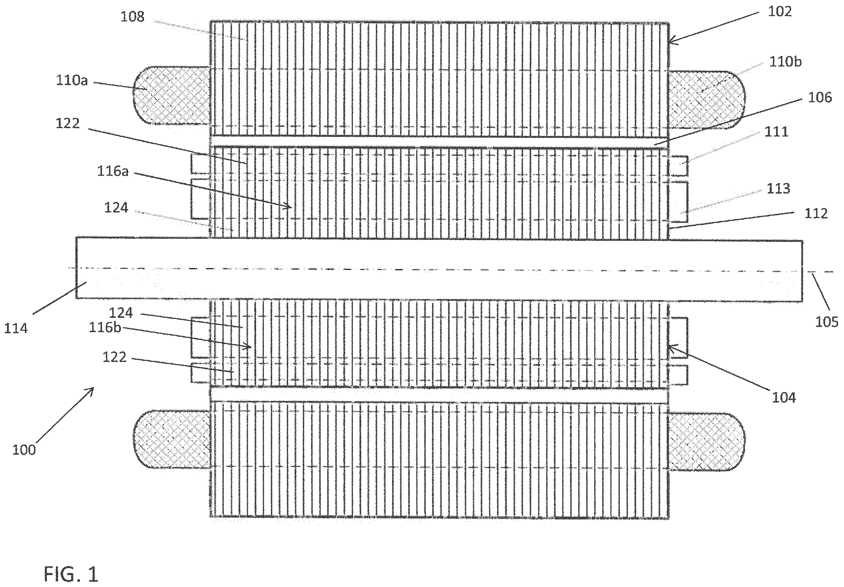

Turning now to FIG. 1, a line start permanent magnet (LSPM) brushless motor 100 is illustrated according to a non-limiting embodiment. The LSPM brushless motor 100 includes a stator 102 and a rotor assembly 104 having a plurality of double-cage windings that rotate with respect to the stator 102. The stator 102 has a concentric housing that extends longitudinally along an axis 105 and defines central opening 106. The central opening 106 is configured to receive the rotor assembly 104 so as to define an air gap therebetween. The stator 102 further includes a stator yoke 108. The stator 102 includes winding slots that extend radially with respect to axis 105 to define a slot depth and longitudinally along the axis 105 between respective first and second end turns 110a-110b to define a slot length. The stator 102 may be constructed according to well-known stator designs and is configured to be energized by placing an alternating current voltage across the windings, including the end turns 110a-110b.

The rotor assembly 104 includes a rotor 112 with a ferromagnetic core that is rotatably mounted on a shaft 114 that extends longitudinally through the central opening 106 defined by the stator 102 and is configured to rotate about the axis 105. In this manner, the rotor 112 is configured to rotate with respect to the stator 102.

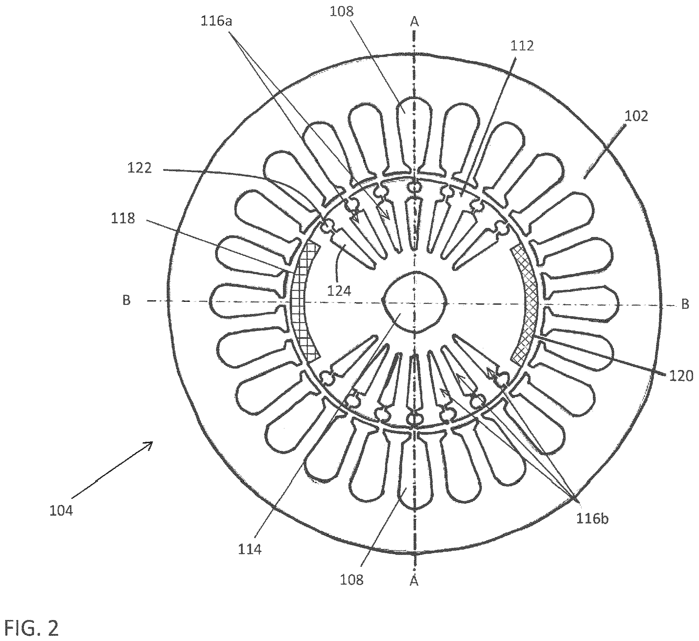

As further illustrated in FIGS. 2-3, the rotor 112 includes a plurality of rotor slots 116a-116b and a magnet unit including a plurality of permanent magnet (PM) elements 118-120. According to a non-limiting embodiment, the PM elements 118-120 partition the rotor 112 into magnet sections and winding sections. For instance, the first and second rotor slots 116a-116b are separated from one another by a respective PM element 118-120. According to a non-limiting embodiment, N number of PM elements separates the plurality of rotor slots into N sets of individual rotor slot groups. As illustrated in FIG. 2, for example, the two PM elements 118-120 separate the rotor slots into a first set of rotor slots 116a and the second set of rotor slots 116b. The rotor slots 116-116b extend radially with respect to the axis 105 to define a rotor slot depth and longitudinally along the axis 105 to define a rotor slot length.

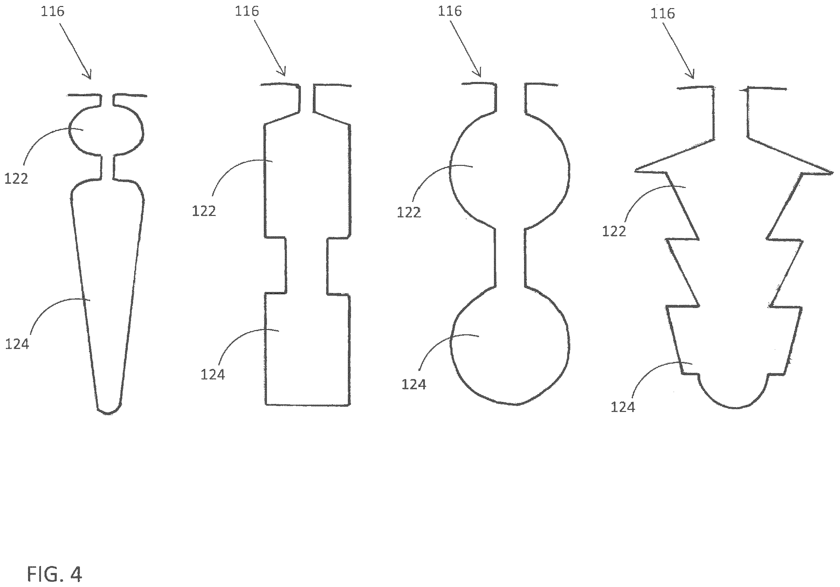

The rotor slots 116a-116b are formed as double-cage windings including an upper cage 122 and a lower cage 124. The upper cage 122 is disposed adjacent the outer circumference of the rotor 112 and is configured to reduce the starting level (*i.e*., amount) of starting current, while at the same time is configured to provide high starting torque. The lower cage is located opposite the upper cage and is disposed adjacent the shaft 114. According to a non-limiting embodiment, the upper cage 122 is sized smaller than the lower cage 124. The shape/cross-section of the upper cage 122 with respect to the shape/cross-section of the lower cage 124 serves to control the relationship between the in-rush current and torque during start-up of the rotor 112. It should be appreciated, however, that the double-cage windings of the rotor slots 106 may be formed according to various shapes (see FIG. 4). The rotor assembly 104 further includes a pair of upper end pieces 111 and a pair of lower end pieces 113 which abut opposite ends of the upper cage 122 and the lower cage 124, respectively. The upper and lower end pieces 111-113 are axially spaced along the axis 105, and are formed of a magnetic conductor such as, for example, stainless steel.

The PM elements 118-120 extend circumferentially along the wall of the rotor 112 and may be fixed in place by any suitable means. According to a non-limiting embodiment, the PM elements 118-120 include a north-pole PM element 118 and an opposing south-pole PM element 120, each of which extends about a circumferential extent of 180 electrical degrees of the rotor 112, although lesser circumferential extents can be used. That is, the plurality of PM elements may include a north-pole magnet arranged 180 electrical degrees with respect to a south-pole magnet. Electrical degrees may be defined as the "mechanical degree" times the number of pole pairs. In the case of a 2 pole-motor, for example, the electrical degree is the same as mechanical degree (one pole pair).

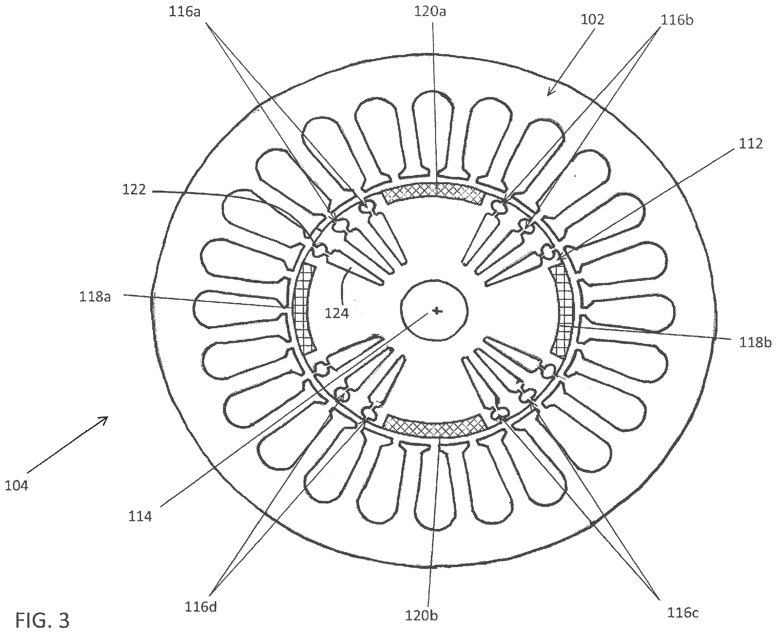

Although a two-pole arrangement *(i.e.,* two opposing PM elements 118-120) is shown in FIG. 2, the rotor assembly 104 may include various other combinations of PM elements. As illustrated in FIG. 3, for example, the plurality of PM elements may include a four-pole arrangement. For instance, a first set of opposing north-pole PM elements 118a-118b and a second set of opposing south-pole PM elements 120a-120b. In this case, the electrical degree *(i.e.,* 180°) is twice the mechanical degree *(i.e.,* 90°) due to the dual pair of pole pairs 118a-118b *(i.e.,* pair one) and 120a-120b *(i.e.,* pair two). Accordingly, the four-pole arrangement allows for a higher frequency compared to the two-pole arrangement illustrated in FIG. 2. The number of PM elements, however, is not limited to any particular number. As further illustrated in FIG. 3, the four PM elements (*i.e*., two sets of north-pole elements 118a-118b and south-pole elements 120a-120b) separate the plurality of rotor slots into four individual sets of rotor slots 116a-116d. In this manner, the PM elements 118a/118b-120a-120b and the rotor slots 116a-116b can all be installed on a single rotor 112 of the rotor assembly 104.

Operation of a LSPM brushless motor 100 that includes a rotor assembly 104 according to either embodiment illustrated in FIGS. 2-3 in essentially the same. For instance, in operation, and under all conditions of motor start-up, the stator 102 is energized which in turn induces currents in the double-cage windings of the rotor slots 116. The resulting magnetic fields generated by current flowing through the double-cage windings generate a torque force which induces rotation of the rotor 112. Unlike conventional line start PM motors which require high starting current (*e.g.*, approximately 4 to 8 times higher than the rated current) to induce rotation of the rotor, however, the double-cage winding of the rotor slots 116 according to at least one non-limiting embodiment of the invention allows for startup of the rotor 104 using substantially less current (*e.g*., approximately 2 to 4 times higher than the rated current. That is, the double-cage winding of the rotor slots 116 provides high starting torque ranging from, for example, approximately 1.5 to 3.5 times higher than the rated torque, at low starting current.

More specifically, the leakage reactance of the double-cage winding of the rotor slots 116 is controlled according to the slip (*s*) of the rotor 112. The slip (*s*) is typically referred to a condition where the rotor rotates at a speed less than synchronous speed. For example, a four-pole induction motor operating at 60 hertz (Hz), for example, has a synchronous speed of 1800 rotations per minute (rpm). The rotor, however, may have an actual speed of 1700 rpm. Such a condition is known as "slip" (*s*) and results in losses associated with induction type motors. Since these losses occur regardless of the operational speed of the motor, such losses are particularly undesirable if the motor runs for extended periods of time.

A case where the *s* = 1 at rotational startup of the rotor 112, means that the frequency of the currents in the rotor 112 (*i.e*., rotor current) is high and equal to the frequency (*f*) of the stator 102. At high frequency (*e.g*., approximately 40 Hz to approximately 400 Hz), the skin effect allows for magnetic fields induced by the winding current to penetrate only into the upper cage 122. Accordingly, the rotor current is generated mainly in the high-resistance and high-inductance upper cage 122, which reduces the starting current. At startup (i.e., at an initial time period), the resistance of the upper cage 122 is several time higher than the resistance of the lower cage 124, while the inductive reactance of the lower cage 124 is higher than the reactive inductance of the reactive inductance of the upper cage 122. As the speed increases, both the slip and the frequency (*sf*) in the rotor 112 also decrease and over time become very low. For instance, at s = 0.01 and 60 Hz, the rotor frequency will be approximately 0.6 Hz. When the rotor 112 approaches synchronism with the magnetic field of the stator 102, the slip also decreases and may reach a very low value (*e.g*., about *s* = 0.02). Synchronism occurs when the mechanical speed of the rotor 112 is equal or substantially equal to, the speed of the stator magnetic rotating field. For example, the synchronism of the system 100 may be defined as the frequency per the number of pairs of PM poles. Further, if the stator frequency is approximately 60 Hz, for example, the rotor frequency (*sf*) may be defined as, *sf* = 0.02 x 60 Hz, equal to 1.2 Hz. As a result, the magnetic field begins to also penetrate into the lower cage 124. In this manner, as the speed increases, the skin effect allows control of the penetration depth of the magnetic field in the double-cage winding such that the in-rush current can be reduced at rotor startup while still providing sufficient start torque to start rotation of the rotor 112.

As the frequency is gradually lowered, the magnetic field begins to also penetrate into the lower cage 124 due the lower cage's low-resistance and low-leakage reactance. Accordingly, a high electromagnetic synchronizing torque is provided ranging, for example, from approximately 1.5 to approximately 3.5 times higher than the rated torque. In this manner, as the speed increases, the skin effect allows control of the penetration depth of the magnetic field in the double-cage winding such that the in-rush current can be reduced at rotor startup while still providing sufficient start torque to start rotation of the rotor 112.

In full synchronism (*i.e*., where the slip is set as *s* = 0) the rotor frequency is defined as *sf* = 0, and the electromagnetic torque is produced solely by the interaction between the PM elements 118-120 and the magnetic rotating field. In this manner, the double-cage winding of the rotor slots 116 can serve as a damper, which reduces the starting current upon rotational startup of the rotor 112 compared to conventional rotors employing only a single-cage winding.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the present invention as defined by the claims. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A line start permanent magnet (LSPM) brushless motor, comprising:
a stator (102) arranged at an inner circumferential surface of a motor body and extending longitudinally along an axis to define a central opening; and
a rotor assembly (104) disposed in the central opening, the rotor assembly comprising:
a magnet unit arranged along an inner circumferential surface of the stator so as to define an air gap between the stator; and
a rotor (112) rotatably coupled to a shaft extending through a center thereof such that the rotor is configured to rotate adjacent the magnet unit, wherein the rotor includes a plurality of rotor slots (116), each rotor slot defining a double-cage winding that includes an upper cage (122) and a lower cage (124).

2. The LSPM brushless motor of claim 1, wherein the rotor slots extend radially between the upper cage and the lower cage with respect to shaft.

3. The LSPM brushless motor of claim 2, wherein the upper cage of each double-cage winding is located between a respective lower cage and the stator.

4. The LSPM brushless motor of claim 3, wherein the upper cage has a cylindrical shape.

5. The LSPM brushless motor of claim 4, wherein the lower cage has a different shape than the upper cage.

6. The LSPM brushless motor of claim 5, wherein the lower cage has a conical shape and has a larger volume than the upper cage.

7. The LSPM brushless motor of any preceding claim, wherein the magnet unit includes a plurality of permanent magnet elements (118-120) having a two-pole arrangement.

8. The LSPM brushless motor of claim 7, wherein the plurality of magnets includes a north-pole magnet arranged 180 electrical degrees with respect to a south-pole magnet.

9. The LSPM brushless motor of claim 1, wherein the magnet unit includes a plurality of permanent magnet elements having a four-pole arrangement.

10. The LSPM brushless motor of claim 9, wherein the plurality of magnets includes a first pair of north-pole magnets arranged 180 electrical degrees with respect to one another, and a second pair of south-pole magnets arranged 180 electrical degrees with respect to one another.

11. The LSPM brushless motor of any preceding claim, wherein the plurality of rotor slots are separated into individual slot groups based on a number of permanent magnet elements included in the magnet unit.

12. The LSPM brushless motor of claim 11, wherein a number of individual slot groups equals the number of permanent magnet elements.

13. The LSPM brushless motor of claim 12, wherein each slot group is separated from one another by a permanent magnet element.

14. A method of reducing in-rush current of a line start permanent magnet (LSPM) brushless motor, the method comprising:
at an initial time period, delivering a startup rotor current through the rotor assembly and delivering a startup stator current through the stator, a frequency of the startup rotor current approximately equal to a frequency of startup stator current so as to induce rotation of the rotor assembly;
inducing a magnetic field based on the startup rotor current, and energizing a double-cage winding rotatably coupled to the rotor assembly via the magnetic field such that a first amount of winding current flowing through an upper cage of the double-cage winding is greater than a second amount of winding current flowing through the lower cage;
increasing a rotational speed of the rotor assembly such that the rotor assembly is approximately synchronized with the magnetic field of the stator at a second time period later than the first time period; and
in response to synchronizing the rotor with the magnetic field, energizing the lower cage along with the upper cage such that the second amount of winding current approximate equals the first amount of winding current so as to reduce the in-rush current during the initial time period.

15. The method of claim 14, wherein a resistance of the upper cage is greater than a resistance of the lower cage, and wherein an inductance of the upper cage is greater than an inductance of the lower cage.
